# EUROPÄISCHE PATENTSCHRIFT

(11) **EP 1 986 889 B1**
(45) Veröffentlichungstag und Bekanntmachung des Hinweises auf die Patenterteilung: **15.09.2010**
(21) Anmeldenummer: 07703272.0
(22) Anmeldetag: 05.02.2007
(51) Int. Cl.: B60R 16/037, B60K 37/00

(54) **VORRICHTUNG UND VERFAHREN ZUR INTERAKTIVEN INFORMATIONSAUSGABE UND/ODER HILFESTELLUNG FÜR DEN BENUTZER EINES KRAFTFAHRZEUGS**
DEVICE AND METHOD FOR INTERACTIVE INFORMATION DISPENSING AND/OR ASSISTANCE FOR THE USER OF A MOTOR VEHICLE
DISPOSITIF ET PROCEDE POUR L'EDITION INTERACTIVE D'INFORMATIONS ET/OU L'ASSISTANCE A L'UTILISATEUR D'UN VÉHICULE

(30) Priorität: 11.02.2006 DE 102006006338; 24.10.2006 DE 102006049965
(43) Veröffentlichungstag der Anmeldung: 05.11.2008
(73) Patentinhaber: Volkswagen Aktiengesellschaft, 38436 Wolfsburg (DE)
(72) Erfinder: WÄLLER, Christoph, 38102 Braunschweig (DE); WU, Yongmei, 38108 Braunschweig (DE); BOHNENBERGER, Thorsten, 38122 Braunschweig (DE); LILIENTHAL, Jörg, 38518 Gifhorn (DE)
(86) Internationale Anmeldenummer: PCT/EP2007/000962
(87) Internationale Veröffentlichungsnummer: WO 2007/090593

(56) Entgegenhaltungen:
- EP-A- 0 893 308
- EP-A- 1 462 317
- EP-A1- 1 431 127
- DE-A1- 19 941 973
- US-A- 6 009 355
- US-A1- 2005 080 528
- US-A1- 2005 238 202
- US-B1- 6 401 029

## Beschreibung

Die Erfindung betrifft eine Vorrichtung und ein Verfahren zur interaktiven Informationsausgabe und/oder Hilfestellung für den Benutzer eines Kraftfahrzeugs.

In Fahrzeugen gemäß dem Stand der Technik sind alle für den Benutzer wissenswerten technischen Merkmale des Kraftfahrzeugs sowie dessen Ausstattungseigentümlichkeiten in der Regel in einem in gedruckter Form vorliegenden Handbuch bzw. Bordbuch enthalten. Zwar verfügen die meisten Fahrzeuge mittlerweile über diverse Diagnosesysteme zur Problemerkennung, sowohl hinsichtlich des Zustands von Fahrzeugkomponenten als auch hinsichtlich von kritischen Fahr- bzw. Fahrersituationen. Doch werden die von einem Diagnosesystem festgestellten Probleme vor oder während der Fahrt dem Benutzer meist lediglich mit Hilfe von Signallämpchen bzw. aufleuchtenden Symbolen oder auch durch kurze Textnachrichten oder Piktogramme angezeigt. Die auf diese Weise übermittelte Information bedeutet, dass ein bestimmtes Problem mit dem Fahrzeug vorliegt, wobei zur Lösung dieses Problems in der Regel der Fälle das Handbuch konsultiert werden muss, welches beispielsweise in gedruckter Form im Handschuhfach vorhanden ist. Das Handbuch wird dabei in der Regel nur dann genutzt, wenn der Fahrer ein Problem mit seinem Fahrzeug bzw. mit dessen Bedienung hat. Die Nutzung des Handbuchs wird gerneinhin als aufwändig, komplex und eher mühsam betrachtet, da viele Benutzer eher ungern längere gedruckte Texte lesen und insbesondere umfangreiche technische Inhalte häufig als abschreckend empfinden.

In der WO 01/27704 A1 ist ein Verfahren zur Erstellung von Unterlagen oder Informationen für ein in der Serie und am Fließband herstellbares technisches Produkt offenbart, wobei während des Produktionsvorgangs unmittelbar am Fließband ein Produktbuch erzeugt wird, die wesentlichen technischen Merkmale des Produktes in das Produktbuch aufgenommen werden, die für die Benutzung und/oder Bedienung des Produktes relevanten Hinweise in dem Produktbuch vermerkt werden und die für das jeweilige Produktexemplar charakteristischen, individuellen Ausstattungseigentümlichkeiten in das diesem Produktexemplar speziell zugeordnete und auf dieses Produktexemplar zugeschnittene Produktbuch aufgenommen werden. Dabei kann das Produktbuch auch als EDV-Datensatz erstellt werden. Dieses Verfahren zielt darauf ab, ein möglichst leicht verständliches und aussagekräftiges Produktbuch unter Vermeidung von unnötiger Lagerhaltung bei möglichst geringen Kosten herzustellen, wobei das Produktbuch auf überflüssige Information soweit wie möglich verzichten soll und dennoch die individuellen Sonderausstattungen eines Produkts berücksichtigen soll. Das Verfahren bietet jedoch keine Unterstützung, wenn der Benutzer beim Vorliegen eines Problems während der Benutzung zunächst aus eigenem Antrieb das Produktbuch konsultieren muss, um mittels eigener Nachforschungen die für das bestehende Problem relevante Information darin zu lokalisieren und zu identifizieren, sich diese dann anzueignen, auszuwerten und gemäß dem ihm zur Verfügung stehenden Erfahrungshorizont zu interpretieren, um dann selbst entscheiden zu müssen, welche Maßnahmen er zur Lösung des Problems ergreifen kann oder soll. Dieses Vorgehen ist jedoch selbst bei einem leicht verständlich aufbereiteten Produktbuch wenig komfortabel, komplex und zeitaufwändig und birgt zudem das Risiko von Fehlinterpretationen und -entscheidungen durch den Benutzer.

Die US-Patentschrift 6,009,355 offenbart ein Multimedia-Informations- und Steuerungssystem zur Verwendung in einem Automobil, in welchem mindestens eine Schnittstelle eingesetzt wird, die es einem Benutzer ermöglicht, auf Informationen hinsichtlich des Automobils und der Fahrzeugsteuerungsfunktionen in effizienter Weise zuzugreifen. Der Benutzer kann dabei eine aus einer Mehrzahl von angezeigten Optionen auf einem Bildschirm einer solchen Schnittstelle auswählen. Durch Audio-, Video- und/oder Textmedien wird der Benutzer mit information hinsichtlich der ausgewählten Option sowie der damit korrespondierenden Fahrzeugfunktion versorgt. Nachdem der Benutzer auf diese Weise informiert wurde, kann er die ausgewählte Option zum Steuern der entsprechenden Fahrzeugfunktion aktivieren. Die Verwendung des Informations- und Steuerungssystems hängt dabei jedoch ausschließlich von einer aktiven Eingabe durch den Benutzer mittels der Schnittstelle ab, d.h. ohne eine Anfrage des Benutzers wird vom System auch keine Information ausgegeben. Besteht ein fahrzeugspezfisches Problem, so muss dieses zunächst von dem Benutzer als solches erkannt werden, bevor er dann selbst aktiv durch die Ebenen des Bedienungsmenüs des Informationssystems navigieren muss, um die für seine aktuellen Belange relevante information aufzufinden. Dies birgt zum einen das Risiko von Fehlinterpretationen durch den Benutzer und beschränkt zum anderen die Anwendungsmöglichkeiten des Systems insbesondere auf Situationen, in denen das Fahrzeug steht und der Benutzer sich nicht auf den Straßenverkehr konzentrieren muss.

In der DE 19941973 A1 ist ein Verfahren und eine Vorrichtung zur aktiven Hilfestellung eines Kraftfahrzeugführers mittels mindestens eines Steuergeräts und einer Ein- und Anzeigeeinheit offenbart. Dabei kann das Steuergerät auf die Daten von fahrzeugzustandsrelevanten Sensoren und Steuergeräten und/oder Komfortsteuergeräten und/oder interne oder externe Datenbanken zugreifen, wodurch eine automatische Unterstützung bei der Kommunikation zwischen dem Kraftfahrzeugführer und dem Fahrzeugsystem gegeben wird. Dabei wird insbesondere durch das Steuergerät ein kritischer Fahrzeugzustand durch Auswertung der Daten der fahrzeugrelevanten Sensoren und Steuergeräten erfasst, sodann eine Liste von möglichen Handlungen des Kraftfahrzeugführers auf den erfassten kritischen Fahrzeugzustand erstellt, der erfasste kritische Fahrzeugzustand und die möglichen Handlungen des Kraftfahrzeugführers werden auf der Anzeigeeinheit dargestellt und eine durch den Kraftfahrzeugführer ausgewählte Handlung wird durch das Steuergerät durchgeführt. Dabei werden die vom System angebotenen Informationen jedoch stets lediglich als Text in Listenform dargestellt. Eine Veränderung dieser Art der Informationsausgabe ist nicht vorgesehen. Da es sich bei dem beschriebenen System auch nicht um eine Informationsvorrichtung, sondern um ein System zur aktiven Hilfestellung durch automatisches Ausführen von Aktionen mittels eines Steuergerätes handelt, ist dieses System auch nicht dazu geeignet, den Benutzer möglichst umfassend über fahrzeuginterne Vorgänge bzw. technische Details zu informieren und ihm die Durchführung möglicher Maßnahmen möglichst verständlich zu erläutern.

Aus der US 2005/0080528 A1 ist ein Steuerungs- und Managementsystem für Automobile bekannt, welches einen zentralen Prozessor umfasst, der traditionell nicht miteinander verbundene Fahrzeuguntersysteme miteinander verbindet, um Synergiefunktionen wie z.B. intelligentes Fahren, automatisches Einparken usw. zu ermöglichen. Eine Hauptsteuerungsschnittstelle umfasst eine Anzeigevorrichtung, die verwendet wird, um einen Nutzer bei der Steuerung und beim Managen der Fahrzeugfunktionen zu unterstützen. Das Steuerungs- und Managementsystem kann in einer Ausführungsform in einem Demonstrationsmodus betrieben werden. Gemäß einem dort beschriebenen Aspekt kann das Demonstrationssystem in einem Übungsmodus betrieben werden, in dem ein zukünftiger Fahrzeugnutzer trainiert und hinsichtlich seiner Vertrautheit und der Beherrschung der Fahrzeugfunktionen getestet werden kann. In dem Übungsmodus werden Fahrsituationen und Fahrzeugzustände auf der Anzeigevorrichtung simuliert. Gleichzeitig muss der zukünftige Nutzer die Hauptsteuerungsschnittstelle bedienen, um jedes Szenario angemessen abzuarbeiten. Erst nachdem die Bedienungsvoraussetzungen befriedigend nachgewiesen sind, wird dem zukünftigen Nutzer eine Betriebsgenehmigung erteilt, um entsprechende Bedienungsvorteile des Steuerungs- und Managementsystems nutzen zu können.

Aus der EP 0 893 308 A2 ist eine Fahrzeugvorrichtung nach dem Oberbegriff des Anspruchs 1, bzw ein Verfahren nach dem Oberbegriff des Anspruchs 12 bekannt. Eine künstliche Person wird als Kommunikationspartner für den Fahrer oder Beifahrer bereitstellt. Ein Statussensor erfasst aktuelle Fahrzeugstatusdaten und speichert diese Daten in einem Speicher. Aus einer Vielzahl von Kommunikationsprogrammen, die in einer Speichertabelle gespeichert sind, wird in Abhängigkeit von den Statusdaten eines der Programme ausgewählt. Das ausgewählte Programm steuert in einer so genannten Agentensteuereinheit die Aktivität der künstlichen Person. Die festgelegten Aktivitäten der künstlichen Person werden durch eine Anzeigevorrichtung und einen Lautsprecher ausgegeben, um mit dem Fahrer zu kommunizieren. Bei einzelnen beschriebenen Ausführungsformen unterstützt die künstliche Person durch Ratschläge eine Bedienung von Fahrzeugsystemen.

Der Erfindung liegt daher das technische Problem zu Grunde, eine verbesserte Vorrichtung und ein verbessertes Verfahren zur interaktiven Informationsausgabe und/oder Hilfestellung für den Benutzer eines Kraftfahrzeugs zu schaffen.

Die Lösung des technischen Problems ergibt sich erfindungsgemäß durch die Gegenstände der Ansprüche 1 und 12. Weitere vorteilhafte Ausgestaltungen der Erfindung ergeben sich aus den Unteransprüchen.

Der Erfindung liegt dabei die Erkenntnis zu Grunde, dass sich eine Verbesserung hinsichtlich der dargebotenen Hilfestellung und Attraktivität der Nutzung der ansonsten üblicherweise in einem Bordbuch enthaltenen Informationen mittels eines "situativen Multimedia-Handbuchs", erzielen lässt, welches auch vorzugsweise als "multimodaler virtueller Fahrzeugassistent" ausgebildet sein kann und dem Benutzer bei erkannten Problemen automatisch auf einer im Fahrzeug vorgesehenen Ausgabeeinheit die relevanten Informationen zur Lösung des Problems in didaktisch adäquater Weise zur Verfügung stellt und weiter vorzugsweise in der Lage ist, mit dem Benutzer in interaktiver Weise zu kommunizieren und auf ihn unmittelbar einzugehen. Dies wird erfindungsgemäß gelöst, indem eine Vorrichtung und ein Verfahren zur Informationsausgabe und/oder Hilfestellung für den Benutzer eines Kraftfahrzeugs vorgeschlagen wird, umfassend mindestens eine Ausgabeeinheit zur Ausgabe von Information, mindestens eine Erfassungseinheit zum Erfassen von Statusdaten bezüglich von Fahrzeugkomponenten und/oder Daten bezüglich einer Fahr- und/oder Fahrersituation, mindestens eine Auswerteeinheit zum Auswerten und Interpretieren der von der Erfassungseinheit erfassten Daten und mindestens eine Erklärungseinheit zum Auswählen und Bereitstellen von Information und/oder Hilfestellung für den Benutzer in Abhängigkeit der von der Auswerteeinheit ausgewerteten und interpretierten Daten, wobei zur Präsentation der ausgegebenen Information mindestens eine aus einer Mehrzahl von verfügbaren Arten der Informationsausgabe in Abhängigkeit der Fahrsituation und/oder des Benutzerwunsches auswählbar und einsetzbar ist und die Bereitstellung der Information selbsttätig in Abhängigkeit einer Fahrsituation und/oder eines vom Benutzer und/oder von der Erklärungseinheit festgelegten Zeitpunkts erfolgt. Auf diese Weise kann eine situative Information und Hilfestellung des Benutzers bei Problemen im Zusammenhang mit dem Fahrzeug automatisch erfolgen. Die ausgegeben Informationen können dazu multimedial präsentiert und für den Benutzer in besonders ansprechender Weise aufbereitet und für eine leichte Verständlichkeit nach didaktischen und ergonomischen Gesichtspunkten optimiert werden. Unter "multimedial" ist dabei zu verstehen, dass für eine bestimmte Information nicht lediglich eine einzige Art der Darstellung bzw. Präsentation zur Verfügung steht, sondern eine Mehrzahl unterschiedlicher Darstellungs- bzw. Präsentationsarten, aus denen eine oder mehrere ausgewählt und alleine oder in Kombination zur Darstellung bzw. Präsentation der Information eingesetzt werden können. Dabei kann die Präsentation der Information bzw. ihrer Inhalte zum Beispiel rein akustisch erfolgen, wobei alle Inhalte dann lediglich sprachlich beschrieben werden. Es sind jedoch für die Ausgabe der Information auch alleine oder in Kombination mit einer akustischen Ausgabe diverse visuelle Darstellungsarten denkbar, beispielsweise als kombinierte Text- und Bilddarstellung und/oder als reine Darstellung von Texten und/oder mittels einer grafischen A-nimation. Die erfindungsgemäße Vorrichtung bzw. das erfindungsgemäße Verfahren kann dabei mittels der Erfassungseinheit auf zahlreiche Statusinformationen bzw. -daten beispielsweise über den Zustand von Fahrzeugkomponenten und/oder bezüglich einer Fahr- und/oder Fahrersituation zurückgreifen, die in den üblicherweise bekannten Fahrzeuguntersystemen ohnehin vorliegen und verarbeitet werden. Die Auswerteeinheit wertet diese Daten insbesondere im Hinblick auf einen potenziellen Informationsbedarf des Benutzers aus und interpretiert sie. Wird im Zuge der Auswertung ein kritischer Zustand erkannt, meldet sich das System selbsttätig vorzugsweise akustisch oder visuell, beschreibt das Problem und erklärt weiter vorzugsweise die nun nötigen Lösungsschritte. Die Erklärungseinheit kann hierzu die für den Benutzer relevanten Informationen auswählen und dem Benutzer dann beispielsweise die Wirkungsweise bestimmter Funktionen und die dazu notwendigen Bedienungsschritte vermitteln. Zwar üben die Erfassungseinheit, die Auswerteeinheit sowie die Erklärungseinheit jeweils einzelne voneinander getrennte Funktionen aus, es ist jedoch ebenso vorstellbar, dass diese Einheiten zusammengefasst und in einer einzigen Verarbeitungseinheit integriert sind. Die von der Erklärungseinheit ausgewählte Information und/oder Hilfestellung wird dabei als "Push"-Information gehandhabt, d. h. die Erklärungseinheit agiert proaktiv und schaltet sich - allerdings unter Berücksichtigung der Fahr- und Fahrersituation - selbsttätig ein. Die Fähigkeit des Systems zu kontext-adaptiver Aktivität führt dazu, dass Informationen oder auch Warnungen nur in einem passenden und fahrtechnisch unkritischen Moment ausgegeben werden. So sind beispielsweise ausführliche Erklärungen zur Behebung eines Fehlers lediglich beim Stillstand des Fahrzeugs zugänglich, während andere, weniger komplexe Informationen auch während der Fahrt, vorzugsweise akustisch, präsentierbar sind. Unter dem "Benutzer" ist zwar vorzugsweise der Fahrer des Kraftfahrzeugs zu verstehen, es kann sich dabei jedoch auch um den Beifahrer oder um einen weiteren Insassen des Fahrzeugs handeln. Es ist sogar vorstellbar, dass das erfindungsgemäße System mehrere Benutzer innerhalb eines Fahrzeugs abwechselnd oder simultan berücksichtigt, um mit diesen jeweils individuell zu kommunizieren und zu interagieren.

Die mittels der erfindungsgemäßen Vorrichtung bzw. dem erfindungsgemäßen Verfahren durchführbare multimediale Informationsausgabe und/oder Hilfestellung kann beispielsweise auch Unfallsituationen betreffen. Dabei können zum Beispiel wichtige Informationen oder Handlungsanweisungen gegeben werden. Es ist auch vorstellbar, dass dabei beruhigend auf den Fahrer eingewirkt werden kann. In Situationen, in denen beispielsweise ein Fahrer als Helfer an einem Unfall agieren will, kann zum Beispiel zur Vorsicht gemahnt und an die wichtigsten Schritte zur ersten Hilfe erinnert werden. Durch die multimediale Informationsausgabe und/oder Hilfestellung wird jedoch vorzugsweise das übliche Bordbuch nicht ersetzt und damit obsolet, sondern lediglich ergänzt. Weiter vorzugsweise sind die von der erfindungsgemäßen Vorrichtung zur Verfügung gestellten Informationen sowie die Informationen des Bordbuchs miteinander "verzahnt", d.h. sie verweisen aufeinander. Dies kann beispielsweise hinsichtlich umfangreicher Sicherheitsinformationen der Fall sein, die aufgrund Ihres Umfangs und Ihres formalen Charakters lediglich im Bordbuch abgelegt sind, oder bezüglich ausschließlich in animierter Form verfügbarer multimedialer Präsentationen, die dann lediglich mittels der erfindungsgemäßen Vorrichtung ausgebbar sind und auf die dann das Bordbuch lediglich verweist. Somit bieten die erfindungsgemäße Vorrichtung und das erfindungsgemäße Verfahren gegenüber einem herkömmlichen Bordbuch den Vorteil, dass dem Benutzer Lösungsvorschläge zu Problemen im Fahrzeugumfeld von dem erfindungsgemäßen System proaktiv, situativ und - zumindest auf Wunsch - unmittelbar angeboten werden können. Des Weiteren ist eine bessere Verständlichkeit von Problemen und Funktionen durch anschauliche und zeitnahe Darstellung sowie eine bessere Akzeptanz und eine verbesserte Wahrnehmung der Fahrzeugdokumentation von Seiten des Benutzers durch einen aktiven, attraktiven und benutzerfreundlichen Zugang gewährleistet. Dies führt in der Praxis über längere Sicht dazu, dass aufgrund der verbesserten Kenntnis des Benutzers mehr der prinzipiell im Fahrzeug verfügbaren Funktionen auch tatsächlich genutzt werden.

Erfindungsgemäß ist mindestens ein Kamerasystem zur Erfassung des Verhaltens des Benutzers mit der Auswerteeinheit oder der Erklärungseiriheit verbunden. Die Bereitstellung der Information erfolgt erfindungsgemäß zusätzlich in Abhängigkeit des von dem Kamerasystem erfassten Verhaltens des Benutzers. Mittels mindestens einer Kamera erfolgt dabei eine Beobachtung der momentanen Situation, in der sich der Benutzer befindet, sowie dessen Verhalten, wobei das von der Kamera erfasste Verhalten des Benutzers dann von der Auswerteeinheit interpretiert werden kann und die Erklärungseinheit dann darauf automatisch in angemessener Weise durch Bereitstellung von Informationen und/oder Hilfestellung reagiert bzw. mit dem Benutzer interagiert. Dabei können beispielsweise Mimik, Gestik und Bewegungen des Benutzers erfasst und interpretiert werden, um hinsichtlich der Art der bereitzustellenden Information und/oder Hilfestellung auf die momentane emotionale Situation des Benutzers angemessen eingehen zu können. Dies erhöht die Interaktionsfähigkeit des Systems mit dem Benutzer. Dadurch wird ebenfalls die Benutzerfreundlichkeit und die Affinität des Benutzers zum System verstärkt und ermöglicht einen intuitiven Umgang des Benutzers mit der Informations- und Bedienvorrichtung. Das Kamerasystem kann dabei entweder mit der Auswerteeinheit oder direkt mit der Erklärungseinheit verbunden sein. In letzterem Fall kann die Erklärungseinheit beispielsweise eine eigene Kameraauswerteeinheit aufweisen, um Daten des Kamerasystems auszuwerten und zu interpretieren. Alternativ könnte die Kameraauswerteeinheit aber auch als integrierter Bestandteil der Auswerteeinheit ausgebildet sein.

In einer vorteilhaften Ausführungsform ist zur Informationsausgabe ein mittels der Ausgabeeinheit erzeugbarer anthropomorpher virtueller Charakter vorgesehen. Dies kann beispielsweise ein sog. "Avatar" sein, d.h. ein virtueller Charakter in Form einer animierten Figur, welcher beispielsweise die dem Benutzer zu vermittelnden Informationen und Inhalte präsentiert und detaillierte Funktionsabläufe demonstriert und erläutert. So ist beispielsweise vorstellbar, dass der Avatar eingesetzt wird, um den Benutzer bei der Bedienung des Systems zu unterstützen, ihm interaktive Hilfestellung und/oder zusätzliche Erklärungen anzubieten und die Ausgabe der Information und/oder Hilfestellung in ansprechender Weise zu umrahmen bzw. zu präsentieren. Dies erhöht die Benutzerfreundlichkeit und verstärkt die Affinität des Benutzers zum System, wodurch dem Benutzer ein zunehmend intuitiver Umgang mit der Informations- und Bedienvorrichtung ermöglicht wird.

In einer weiteren vorteilhaften Ausführungsform ist durch das Kamerasystem die Blickrichtung des Benutzers erfassbar und die Bereitstellung der Information erfolgt in Abhängigkeit der Blickrichtung des Benutzers. Dies kann beispielsweise dazu dienen, eine fortschreitende Ermüdung des Benutzers zu detektieren und automatisch angemessene Maßnahmen, beispielsweise das Auslösen einer Alarmfunktion oder Abbrems- und/oder Lenkeingriffe, einzuleiten. Wird ein anthropomorpher virtueller Charakter zur Präsentation eingesetzt, kann dieser anhand der erfassten Blickrichtung des Benutzers dieser mit seinem eigenen Blick folgen, somit den Benutzer anschauen und besser auf diesen bzw. dessen Verhalten unmittelbar eingehen. Abhängig von der ermittelten Blickrichtung - vorzugsweise auch in Kombination mit der ebenfalls erfassten Mimik und Gestik des Benutzers - kann er dadurch auch die Fähigkeit besitzen, bestimmte Bedürfnisse des Benutzers zu erkennen und daraufhin bestimmte Handlungen des Benutzers vorwegzunehmen und/oder vorzubereiten, beispielsweise Menueinstellungeh vornehmen, Telefonverbindung herstellen, Autoradio bzw. Navigationssystem einschalten, Klimaanlage aus- bzw. einschalten, etc, und mit dem Benutzer diesbezüglich automatisch in Kommunikation zu treten. Dies erhöht wiederum die Interaktionsfähigkeit des Systems mit dem Benutzer und somit die Benutzerfreundlichkeit, verstärkt die Affinität des Benutzers zum System und ermöglicht einen noch intuitiveren Umgang des Benutzers mit der Informations- und Bedienvorrichtung.

In einer weiteren vorteilhaften Ausführungsform ist anhand der mittels der Ausgabeeinheit präsentierten Information eine interaktive Anleitung des Benutzers zur Beherrschung von Fahrzeugfunktionen und/oder Fahrsituationen durchführbar. Dies bietet den Vorteil, dass das System zwar abhängig von Fahrsituation und Voreinstellung des Systems selbsttätig eine Auswahl zur Bereitstellung von Information und/oder Hilfestellungen trifft und entsprechende Vorschläge macht, der Benutzer im Zuge der Bereitstellung der Information dann aber selbst auf die Art und Weise der Präsentation sowie insbesondere die Informationstiefe sowie die weiteren durchzuführenden Maßnahmen einwirken kann, so dass ihm lediglich diejenigen Informationen und/oder Hilfestellungen präsentiert werden, die für ihn zu diesem Zeitpunkt tatsächlich relevant sind. Dies kann durch manuelle interaktive Einrichtungen, beispielsweise in Form einer menügesteuerten Bedienung mittels einer Eingabeeinheit, erfolgen. Vorzugsweise handelt es sich dabei um Bedienknöpfe und/oder um eine grafische Benutzeroberfläche, z.B. im Rahmen eines Displays, Bildschirms oder Touch-Screens, und/oder eine Multifunktions-Anzeige mit Eingabemöglichkeit. Dies kann jedoch beispielsweise auch über eine vorzugsweise vorhandene Einrichtung zur Spracherkennung erfolgen, da diese eine für den Benutzer besonders komfortable und bequeme Bedienbarkeit mit sich bringt.

In einer weiteren vorteilhaften Ausführungsform sind die Arten der Informationsausgabe zumindest teilweise individuell konfigurierbar. Dabei können sowohl die prinzipielle Art der Ausgabe der Information als auch deren jeweilige Parameter benutzerspezifisch konfigurierbar sein. Es ist zum Beispiel vorstellbar, dass die Ausgabe unter Anwendung von Multimedia-Komponenten, beispielsweise Sprachausgabe, Text, grafischen Bildelementen und/oder Animationen, erfolgt. Die konkrete Darstellungs- bzw. Ausgabeform kann dabei vorzugsweise - auch im Hinblick auf bestimmte unterschiedliche Fahr- bzw. Fahrersituationen - vom Benutzer ausgewählt und seinen spezifischen Bedürfnissen und Wünschen angepasst werden oder aber vorab werkseitig eingestellt sein.

In einer weiteren vorteilhaften Ausführungsform sind die Arten der Informationsausgabe durch zusätzliche Präsentationsmittel ergänzbar und individualisierbar. Es ist dabei z.B. vorstellbar, dass der vorzugsweise vorgesehene anthropomorphe virtuelle Charakter durch den Benutzer nach dessen persönlichen Vorstellungen individuell konfiguriert und seinem Geschmack angepasst werden kann, beispielsweise hinsichtlich verwendeter Grafik- bzw. Animationselemente (virtuelle Figuren sowie deren Aussehen, Erscheinung, Gesicht, etc) sowie Klangelementen (z.B. Stimme, Wamtöne, Hintergrundgeräusche, Musik, etc.), Hintergrundbild, allgemeiner Farbgestaltung, o.ä. Auch dies erhöht die Affinität des Benutzers zum System und verstärkt dessen Akzeptanz beim Benutzer. Die zusätzlichen Präsentationsmittel erhöhen dabei außerdem das Verständnis des Benutzers hinsichtlich der präsentierten Information und verbessem seine Fähigkeiten, die verschiedenen Fahrzeugfunktionen bedienen und mit diesen interagieren zu können. Es ist des Weiteren auch vorstellbar, dass die zusätzlichen Präsentationsmittel durch Abruf von mindestens einer zentralen Datenbank bedarfsweise durch den Benutzer individuell zusammenstellbar und/oder veränderbar sind. Somit kann eine enorme Bandbreite an Variations- und Gestaltungsmöglichkeiten hinsichtlich der Präsentationsmittel gewährleistet werden, ohne dabei zusätzliche lokale Systemressourcen im Fahrzeug zu beanspruchen, wobei dennoch ohne wesentlichen Aufwand in einfacher Weise zu jeder Zeit und unabhängig vom Standort Anpassungen an die persönlichen Wünsche und Vorstellungen des Benutzers in großer Variantenvielfalt vorgenommen werden können. Es ist des Weiteren vorstellbar, dass auf diese Weise auch die in einer fahrzeuginternen Speicher- und/oder Recheneinheit abgelegten Daten, die den bereitzustellenden Informationen bzw. Hilfestellungen zugrunde liegen, auf den aktuellsten Stand gebracht werden können, beispielsweise durch "Herunterladen" aktueller Gebrauchsanweisungen, Benutzerhandbücher, Software oder sonstiger Aktualisierungen.

In einer weiteren vorteilhaften Ausführungsform weist die Vorrichtung eine Lemfunktion auf, bei der für einen Benutzer durch aktives Befolgen von mittels der Erklärungseinheit bereitgestellten Anweisungen das Bedienen mindestens einer Fahrzeugfunktion erlernbar ist, wobei der Fahrer in Abhängigkeit der von ihm durchgeführten Handlungen von der Erklärungseinheit mindestens eine positive oder negative Rückmeldung erhält. Dabei kann die Lernfunktion beispielsweise in Form mindestens eines eigenständigen Unterprogramms in einer Speichereinheit der erfindungsgemäßen Vorrichtung vorliegen und bei Bedarf abgerufen und gestartet werden. Vorzugsweise dient dabei jeweils eine interaktive Lerneinheit, ein sog. "Tutonal", dem Erlernen einer bestimmten Fahrzeugfunktion. Die Lerneinheiten können dabei entweder jeweils als eigene Unterprogramme ausgebildet sein oder aber in einem gemeinsamen Unterprogramm zusammengefasst sein. Die Lemeinheiten vermitteln dem Benutzer Prinzip und Wirkungsweise bestimmter Fahrzeugfunktionen (z.B., Einstellung eines Navigationsziels, Speichern eines Radiosenders, Lösen der Handbremse, etc.) und die dazu notwendigen Bedienschritte. Die Lemeinheiten sind interaktiv, d.h. sie erfordern die Aktivität des Benutzers. Der Benutzer erlernt die Bedienung der Fahrzeugfunktionen durch reale Interaktion mit dem Fahrzeug, d.h. zum Erlernen einer Fahrzeugfunktion muss der Benutzer die zu erlernende Aktion unmittelbar während des Tutorials durchführen. Durch eine Vernetzung mit den weiteren Fahrzeugsystemen empfängt die erfindungsgemäße Vorrichtung die von der Benutzeraktion ausgelösten Daten und kann dem Benutzer dann unmittelbar positives oder - bei Fehlbedienung - negatives Feedback geben. Durch das unmittelbare Verfolgen der Benutzeraktionen durch die erfindungsgemäße Vorrichtung und die dementsprechende Rückmeldung an den Benutzer kann der Lernerfolg deutlich und nachhaltig verbessert werden. Aus Sicherheitsgründen lässt sich die Lernfunktion dabei jedoch vorzugsweise nicht während der Fahrt vom Fahrer aufrufen.

In einer weiteren vorteilhaften Ausführungsform ist die Ausgabeeinheit zumindest als Bestandteil eines Multifunktionsbedienelements und/oder eines Navigationssystems ausgebildet. Auf diese Weise kann die erfindungsgemäße Vorrichtung in platz- und ressourcensparender Weise zumindest teilweise in bereits bekannte Fahrzeugsysteme integriert werden, wodurch zudem Kosten sowie Herstellungs- und Montageaufwand reduziert werden. So ist beispielsweise die Nutzung eines gemeinsamen Displays bzw. Bildschirms sowie einer zugehörigen Eingabevorrichtung vorstellbar.

In einer weiteren vorteilhaften Ausführungsform ist durch den Benutzer bedarfsweise mittels einer Eingabevorrichtung mindestens ein Marker setzbar, wodurch die Ausgabe von mittels der Erklärungseinheit zu einem aktuellen Zeitpunkt bereits ausgewählter und bereitstellbarer Information auf einen späteren Zeitpunkt verschiebbar ist. So lassen sich bestimmte Präsentationsformen bzw. Funktionen der erfindungsgemäßen Vorrichtung, wie beispielsweise animierte, von einem virtuellen Charakter präsentierte Inhalte oder die Lemfunktion mittels verschiedener "Tutorials", aus Sicherheitsgründen vom Fahrer vorzugsweise nicht während der Fahrt aufrufen. Der Fahrer kann jedoch, sobald während der Fahrt eine Informationsausgabe anliegt und vom System entsprechend angekündigt wird, einen Marker setzen. Vorzugsweise wird dann beim Stillstand des Fahrzeugs bzw. nach Abschalten des Motors automatisch die mittels des Markers gekennzeichnete Information, z.B. ein Tutorial zu einem gemerkten Thema, gestartet. Die Darbietung der Information kann jedoch vom Fahrer auch auf einen beliebigen späteren Zeitpunkt, z.B. mittels einer einfachen menügeführten Abfrage, verschoben werden.

In einer weiteren vorteilhaften Ausführungsform ist die Eingabevorrichtung als Einrichtung zur Spracherkennung ausgebildet. Auf diese Weise kann eine Interaktion des Fahrers mit der erfindungsgemäßen Vorrichtung während der Fahrt, beispielsweise das Setzen eines Markers oder die Bedienung von interaktiven Menüfunktionen, aber auch die Kommunikation mit dem vorzugsweise vorgesehenen anthropomorphen virtuellen Charakter, mittels Spracheingabe erfolgen, um eine Gefährdung durch Ablenkung des Fahrers möglichst gering zu halten. Die Vorrichtung zur Spracherkennung ist dabei vorzugsweise zusätzlich zu weiteren manuellen interaktiven Einrichtungen wie beispielsweise Bedienknöpfen oder einem Touch-Screen vorgesehen.

In einer weiteren vorteilhaften Ausführungsform ist mittels der Einrichtung zur Spracherkennung mindestens eine Stimmkenngröße des Benutzers erfassbar. Die Stimmkenngröße kann dabei beispielsweise Lautstärke, Tonfall, Tonhöhe, etc. der Stimme sein. Auf diese Weise können neben den üblichen Sprachbefehlen auch Emotionen des Benutzers, wie z.B. Aufgeregtheit, Nervosität, Traurigkeit, Müdigkeit, etc. anhand der Auswerteeinheit detektiert werden, um darauf in Abhängigkeit der Stimmkenngröße bei der Bereitstellung der Informationen bzw. Hilfestellungen angemessen einzugehen. Es ist jedoch auch vorstellbar, dass die Fähigkeit zur Detektion und Interpretation von Stimmkenngrößen auch zur Identifizierung des Benutzers eingesetzt werden kann, um einerseits die Inbetriebnahme des Fahrzeugs bzw. bestimmter Funktionen zu ermöglichen und/oder andererseits ggf. gespeicherte individuelle Benutzerkonfigurationen einzustellen.

Die Erfindung wird nachfolgend anhand eines bevorzugten Ausführungsbeispiels näher erläutert. In den zugehörigen Figuren zeigen
Fig. 1 eine schematische Darstellung einer bevorzugten Ausführungsform einer erfindungsgemäßen Vorrichtung als Blockschaltbild,
Fig. 2 eine schematische Darstellung einer vorteilhaften Ausführungsform der Ausgabeeinheit einer erfindungsgemäßen Vorrichtung und
Fig. 3 eine schematische Darstellung einer weiteren vorteilhaften Ausführungsform einer erfindungsgemäßen Vorrichtung als Blockschaltbilds.

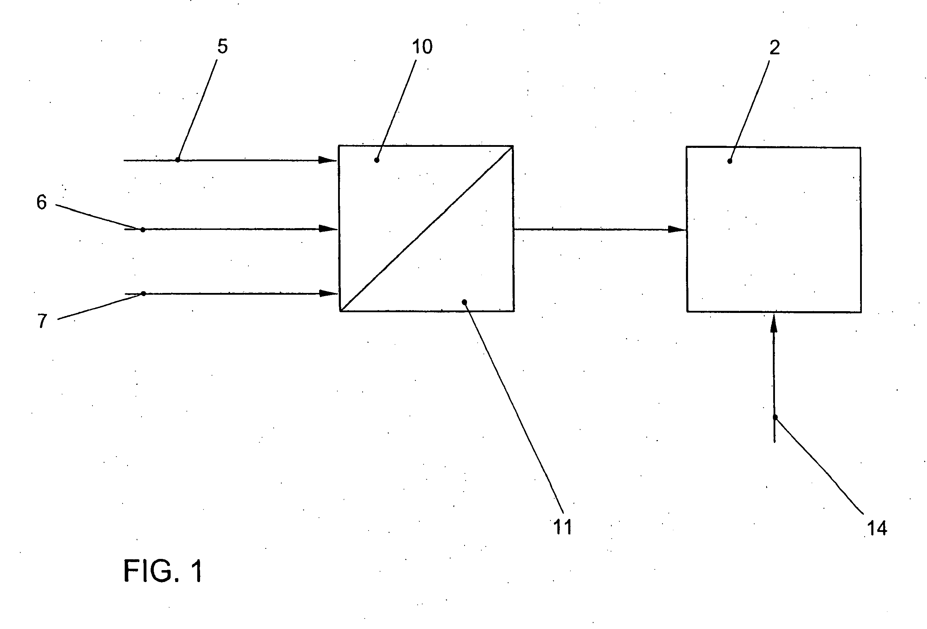

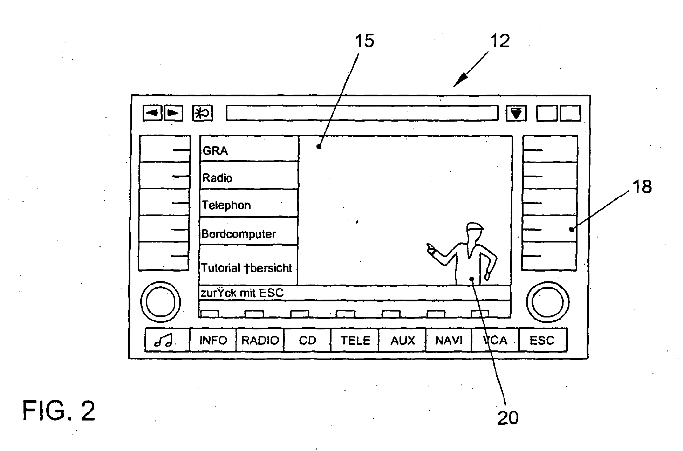

Fig. 1 zeigt schematisch ein Blockschaltbild einer bevorzugten Ausführungsform einer erfindungsgemäßen Vorrichtung zur Informationsausgabe und/oder Hilfestellung für den Benutzer eines Kraftfahrzeugs. Diese umfasst eine Ausgabeeinheit 2 zur Ausgabe von Information. Des Weiteren umfasst sie eine Erfassungseinheit, die zum Erfassen von Statusdaten bezüglich von Fahrzeugkomponenten 5 sowie Daten bezüglich einer Fahrsituation 6 und/oder Daten bezüglich einer Fahrersituation 7 geeignet ist. Die Erfassungseinheit ist integrativer Bestandteil einer Auswerteeinheit 10 zum Auswerten und Interpretieren der von der Erfassungseinheit erfassten Daten 5, 6, 7. Die Statusdaten bezüglich Fahrzeugkomponenten 5 können dabei entweder von Sensoren (nicht dargestellt) stammen, die den aktuellen Zustand der betreffenden Fahrzeugkomponenten erfassen, z.B. Öldruck, -stand und/oder -temperatur bzw. Reifendruck, Zustand der Bremsbeläge, etc. Sie können jedoch auch von einer oder mehreren weiteren Datenverarbeitungseinheiten, z.B. einem Bordrechner, Steuergeräten oder einem Bussystem (nicht dargestellt) stammen, die den Zustand der Fahrzeugkomponenten auf der Basis von Sensordaten bereits vorangehend erfasst haben. Die Daten bezüglich einer Fahrsituation können ebenfalls von Sensoren oder vorgeschalteten Datenverarbeitungseinheiten stammen, z.B. einem System zur aktiven Regelung der Fahrzeugstabilität, einem elektromechanischen Lenksystem, einem Navigationssystems, etc. Sie beschreiben vorzugsweise Zustände, in denen sich das Fahrzeug während seines Betriebes befindet, beispielsweise einem Brems- bzw. Lenkzustand während der Fahrt sowie der Erfassung des Bewegungszustands, d.h. ob sich das Fahrzeug bewegt oder im Stillstand befindet. Die Daten bezüglich einer Fahrersituation können ebenfalls von Sensoren oder vorgeschalteten Datenverarbeitungseinheiten stammen, z.B. einem Lenkradsensor, einer Kamera zur Erfassung des Ermüdungszustandes des Fahrers, etc. Sie beschreiben vorzugsweise Zustände, in denen sich der Fahrer während des Betriebs des Fahrzeugs befindet. Die erfindungsgemäße Vorrichtung kann somit mittels der Erfassungseinheit auf zahlreiche Statusinformationen bzw. -daten beispielsweise über den Zustand von Fahrzeugkomponenten und/oder bezüglich einer Fahr- und/oder Fahrersituation zurückgreifen, die in den üblicherweise bekannten Fahrzeugsystemen ohnehin vorliegen und verarbeitet werden. Die Auswerteeinheit 10 wertet diese Daten insbesondere im Hinblick auf einen potenziellen Informationsbedarf des Benutzers aus und interpretiert sie. Die erfindungsgemäße Vorrichtung weist des Weiteren eine Erklärungseinheit 11 zum Auswählen und Bereitstellen von Information und/oder Hilfestellung für den Benutzer in Abhängigkeit der von der Auswerteeinheit 10 ausgewerteten und interpretierten Daten auf. Auswerteeinheit 10 und Erklärungseinheit 11 sind dabei vorzugsweise zu einer gemeinsamen Recheneinheit zusammengefasst. Zur Präsentation der ausgegebenen Information wird dabei von der Erklärungseinheit 11 eine aus einer Mehrzahl von verfügbaren Arten der Informationsausgabe in Abhängigkeit der Fahrsituation und/oder des Fahrerwunsches ausgewählt und eingesetzt. Dabei kann die Präsentation der Information bzw. ihrer Inhalte multimedial, d.h. zum Beispiel akustisch erfolgen, wobei alle Inhalte dann lediglich sprachlich beschrieben werden, oder visuell, d.h. in Text- und/oder Bildform, grafisch, in animierter Form oder als beliebige Kombination dieser Ausgabearten. Es ist auch vorstellbar, dass zumindest Teilinformationen, z.B. Rückmeldungen an den Fahrer, haptisch (z.B. mittels Vibration) ausgegeben werden. Im vorliegenden Fall der Fig. 1 wird von einem sich bewegenden Fahrzeug ausgegangen. Wird von der Auswerteeinheit 10 ermittelt, dass das Fahrzeug sich bewegt, so veranlasst sie die Erklärungseinheit 11 vorzugsweise, die Informationen lediglich rein akustisch auszugeben, um den Fahrer nicht unverhältnismäßig beim Steuern des Fahrzeugs abzulenken. Die Bereitstellung der Information erfolgt dabei selbsttätig in Abhängigkeit der Fahrsituation und/oder eines vom Fahrer und/oder von der Erklärungseinheit 11 festgelegten Zeitpunkts. Wird im Zuge der Auswertung der Statusdaten bezüglich Fahrzeugkomponenten 5 oder der Daten bezüglich einer Fahr- bzw. Fahrersituation 6, 7 ein kritischer Zustand erkannt, meldet sich das System selbsttätig, im Falle des sich bewegenden Fahrzeugs vorzugsweise akustisch, beschreibt das Problem und erklärt weiter vorzugsweise, sofern der Benutzer dies wünscht, die nun nötigen Lösungsschritte. Die Erklärungseinheit 11 wählt hierzu die für den Benutzer relevanten Informationen aus und vermittelt dem Benutzer dann beispielsweise die Wirkungsweise bestimmter Funktionen und die dazu notwendigen Bedienungsschritte. Die von der Erklärungseinheit 11 ausgewählte Information und/oder Hilfestellung wird also als "Push"-Information gehandhabt, d. h. die Erklärungseinheit 11 agiert proaktiv und schaltet sich unter Berücksichtigung der Fahr- und Fahrersituation selbsttätig ein. Die Fähigkeit des Systems zu erkennen, ob und in welcher Form die Ausgabe einer Information angebracht und angemessen ist, wird als kontext-adaptive Aktivität bezeichnet, d.h. Informationen oder auch Warnungen werden nur in einem passenden und fahrtechnisch unkritischen Moment ausgegeben. Vorzugsweise ist die Ausgabeeinheit 2 als interaktive Benutzerschnittstelle 12 (s. Fig. 2) ausgebildet, d.h. sie weist auch eine Eingabevorrichtung auf, mittels derer der Benutzer eine Dateneingabe 14 vornehmen kann.

Fig. 2 zeigt schematisch eine vorteilhafte Ausführungsform zumindest eines wesentlichen Bestandteils einer Ausgabeeinheit 2 einer erfindungsgemäßen Vorrichtung. Der dargestellte Bestandteil der Ausgabeeinheit 2 ist dabei eine interaktive Benutzerschnittstelle 12, welche als Multifunktions-Anzeige mit Eingabemöglichkeit ausgebildet ist und zumindest ein Display 15 sowie Tasten 18 aufweist. Anhand der mittels der interaktiven Benutzerschnittstelle 12 präsentierten Information ist z.B. eine interaktive Anleitung des Benutzers zur Beherrschung von Fahrzeugfunktionen und/oder Fahrsituationen durchführbar, beispielsweise in Form einer menügesteuerten Bedienung über die interaktive Benutzerschnittstelle 12. Für die Ausgabe der Information über die interaktive Benutzerschnittstelle 12 kann somit insbesondere auf visuelle Darstellungsarten, alleine oder in Kombination mit einer akustischen Informationsausgabe, zurückgegriffen werden, beispielsweise als kombinierte Text- und Bilddarstellung und/oder als reine Darstellung von Texten und/oder mittels eines Avatars 20, d.h. einem virtuellen Charakter in Form einer animierten Figur, welche die Inhalte präsentiert und detaillierte Funktionsabläufe demonstriert und erläutert. Der Avatar 20 kann den Benutzer bei der Bedienung des Systems unterstützen, ihm interaktive Hilfestellung und/oder zusätzliche Erklärungen anbieten und die Ausgabe der Information und/oder Hilfestellung in ansprechender Weise umrahmen bzw. präsentieren. Der Avatar 20 kann durch den Benutzer nach dessen persönlichen Vorstellungen individuell konfiguriert und seinem Geschmack angepasst werden, beispielsweise hinsichtlich verwendeter Grafik- bzw. Animationselemente (Typ der virtuellen Figur sowie deren Aussehen, Erscheinung, Gesicht, etc.) sowie Klangelementen (z.B. Stimme, Warntöne, Hintergrundgeräusche, Musik, etc.), Hintergrundbild, allgemeiner Farbgestaltung, o.ä. Sowohl die Konfiguration des Avatars 20 als auch die sonstigen multimedialen Präsentationsmittel (z.B. die für die akustische Informationsausgabe verwendete Stimme, Klanguntermalung, Signaltöne sowie grafische Elemente, Symbole, etc.) sind durch Abruf von einer zentralen Datenbank mittels Datenfernübertragung bedarfsweise durch den Benutzer individuell zusammenstellbar und/oder veränderbar. Da die visuelle Darstellung detaillierter Informationen, insbesondere bei der Durchführung von interaktiven Abfragevorgängen oder Tutorials zum Erlernen von Fahrzeugfunktionen die Aufmerksamkeit des Benutzers in hohem Maße beansprucht, werden die in Fig. 2 beispielhaft dargestellten mittels der interaktiven Benutzerschnittstelle 12 anzeigbaren visuellen Arten der Informationsdarstellung vorzugsweise nur beim Stillstand des Fahrzeugs ausgegeben.

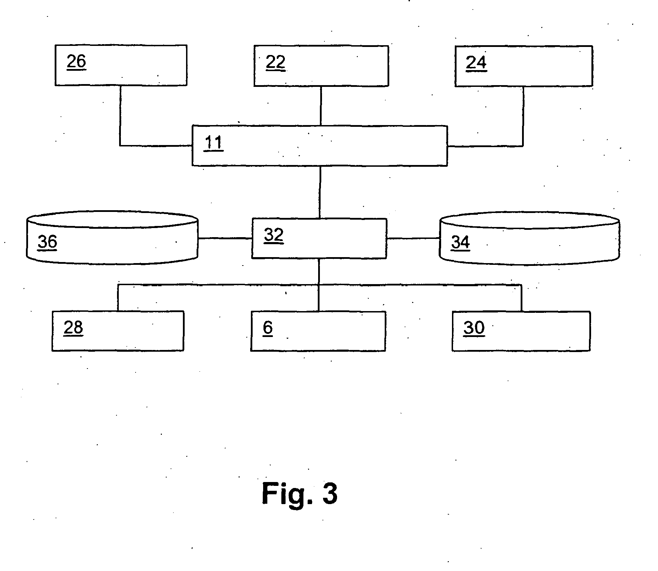

Fig. 3 zeigt schematisch ein Blockschaltbild einer weiteren bevorzugten Ausführungsform einer erfindungsgemäßen Vorrichtung zur Informationsausgabe und/oder Hilfestellung für den Benutzer eines Kraftfahrzeugs, wobei die Erklärungseinheit 11 als multimodaler virtueller Fahrzeugassistent ausgebildet ist. Des Weiteren sind manuelle interaktive Einrichtungen 26, die beispielsweise Bedienknöpfe. Touch-Screens, etc. sein können, ein Kamerasystem 22 und eine Spracherkennungseinrichtung 24 vorgesehen, die zumindest teilweise auch Bestandteil einer Ausgabeeinheit 2 (s. Fig. 1) bzw. einer Multifunktionsbedieneinheit sein können und gemeinsam mit dieser dann eine interaktive Benutzerschnittstelle (s. Fig. 2) bilden können. Des Weiteren sind, jeweils beispielsweise in einem Speichermedium und/oder einer Datenbank gespeichert, Fahrzeugkonfigurationsdaten 36 und mindestens ein abgespeichertes Benutzermodell 34, das idealerweise zum aktuellen Benutzer gehört, vorgesehen. Die Erfassungseinheit und die Auswerteeinheit 10 (s. Fig. 1) sind in dieser Ausführungsform zu einem Kontext-Interpretierer 32 zusammengefasst. Außerdem stehen neben Daten bezüglich einer Fahrsituation 6 auch Daten bezüglich einer Umgebungssituation 28 zur Verfügung. Letztere können beispielsweise aktuelle Statusdaten bezüglich Fahrzeugkomponenten 5 (s. Fig. 1) umfassen, aber auch mittels weiterer Sensoren erfasste Umgebungsdaten, z.B. Temperatur, Umgebungsluftdruck, Windrichtung und -geschwindigkeit, Fahrbahnbeschaffenheit, Niederschlag, etc. Außerdem stehen Daten aus einer drahtlosen Verbindung 30 zur Verfügung. Diese können beispielsweise von einem Mobiltelefon, einem Online-Portal, einem Intemet-Serviceprovider, einem Laptop oder einem stationären PC, etc. stammen. Der Kontext-Interpretierer 32 greift auf die Daten bezüglich einer Umgebungssituation 28, die Daten bezüglich einer Fahrsituation 6, die Daten aus einer drahtlosen Verbindung 30, die Fahrzeugkonfigurationsdaten 36 und das Benutzermodell 34 zu, filtert die darin enthaltene Information und interpretiert die Bedeutung der zu Grunde liegende Situation. Die als multimodaler virtueller Fahrzeugassistent ausgebildete Erklärungseinheit 11 steht in Verbindung mit dem Kontext-Interpretierer 32 und sieht vorzugsweise einen anthropomorphen virtuellen Charakter, d.h. einen Avatar 20 (s. Fig. 2) zur Präsentation von Informationen und Hilfestellungen vor. Die Erklärungseinheit 11 kann dann beispielsweise dem Benutzer die Information bezüglich der vom Kontext-Interpretierer 32 ermittelten Situation durch den Avatar 20 beispielsweise mittels akustischer Sprachausgabe mitteilen. Zusätzlich- zu den manuellen interaktiven Einrichtungen 26 kann der Benutzer über die Spracherkennungseinrichtung 24 mit dem Avatar 20 bzw. der Erklärungseinheit 11 kommunizieren. Durch Verwendung des mit der Erklärungseinheit 11 verbundenen Kamerasystems 22, welches das Verhalten des Benutzers erfasst, kann der Avatar 20 beispielsweise der Blickrichtung des Benutzers folgen, den Benutzer anschauen und unmittelbar auf diesen eingehen und einwirken. Die Erklärungseinheit 11 verfügt dabei vorzugsweise über eine eigene Kameraauswerteeinheit (nicht dargestellt), um die von dem Kamerasystem 22 stammenden Informationen auszuwerten und zu interpretieren. In Abhängigkeit des gespeicherten Benutzermodells 34, der Gestik und Mimik des Benutzers sowie dessen Blickrichtung hat der multimodale virtuelle Fahrzeugassistent (d.h. die Erklärungseinheit 11, repräsentiert durch den Avatar 20) die Fähigkeit, Bedürfnisse des Benutzers zu erkennen, dessen Handlungen vorwegzunehmen bzw. vorzubereiten (z.B. Menüeinstellungen vornehmen, Telefonverbindung herstellen, Radio einschalten, etc.) und mit dem Benutzer diesbezüglich zu kommunizieren.

### Bezugszeichenliste

- 2: Ausgabeeinheit
- 5: Statusdaten bezüglich Fahrzeugkomponenten
- 6: Daten bezüglich einer Fahrsituation
- 7: Daten bezüglich einer Fahrersituation
- 10: Auswerteeinheit
- 11: Erklärurigseinheit
- 12: interaktive Benutzerschnittstelle
- 14: Dateneingabe
- 15: Display
- 18: Tasten
- 20: Avatar
- 22: Kamerasystem
- 24: Spracherkennungseinrichtung
- 26: manuelle interaktive Einrichtungen
- 28: Daten bezüglich einer Umgebungssituation
- 30: Daten aus einer drahtlosen Verbindung
- 32: Kontext-Interpretierer
- 34: Benutzermodell
- 36: Fahrzeugkonfigurationsdaten

## Patentansprüche

1. Vorrichtung zur Informationsausgabe und/oder Hilfestellung für den Benutzer eines Kraftfahrzeugs, umfassend
• mindestens eine Ausgabeeinheit (2) zur Ausgabe von Information,
• mindestens eine Erfassungseinheit zum Erfassen von Statusdaten bezüglich von Fahrzeugkomponenten (5) und/oder Daten bezüglich einer Fahr- und/oder Fahrersituation (6, 7),
• mindestens eine Auswerteeinheit (10) zum Auswerten und Interpretieren der von der Erfassungseinheit erfassten Daten,
• mindestens eine Erklärungseinheit (11) zum Auswählen und Bereitstellen von Information und/oder Hilfestellung für den Benutzer in Abhängigkeit der von der Auswerteeinheit (10) ausgewerteten und interpretierten Daten,
wobei die die Erklärungseinheit ausgebildet ist,
zur Präsentation der ausgegebenen Information mindestens eine aus einer Mehrzahl von verfügbaren Arten der Informationsausgabe in Abhängigkeit der Fahrsituation und/oder des Benutzerwunsches auszuwählen und einzusetzen, und die Bereitstellung der Information selbsttätig in Abhängigkeit einer Fahrsituation und/oder eines vom Benutzer und/oder von der Erklärungseinheit (11) festgelegten Zeitpunkts erfolgt,
**dadurch gekennzeichnet, dass** die Vorrichtung
mindestens ein Kamerasystem (22) zur Erfassung des Verhaltens des Benutzers umfaßt, welches mit der Auswerteeinheit (10) oder der Erklärungseinheit (11) verbunden ist und die Bereitstellung der Information zusätzlich in Abhängigkeit des von dem Kamerasystem (22) erfassten Verhaltens des Benutzers erfolgt.

2. Vorrichtung nach Anspruch 1, **dadurch gekennzeichnet, dass** zur Informationsausgabe ein mittels der Ausgabeeinheit (2) erzeugbarer anthropomorpher virtueller Charakter verwendet wird.

3. Vorrichtung nach Anspruch 1 oder 2, **dadurch gekennzeichnet, dass** durch das Kamerasystem (22) die Blickrichtung des Benutzers erfassbar ist und die Bereitstellung der Information in Abhängigkeit der Blickrichtung des Benutzers erfolgt.

4. Vorrichtung nach einem der genannten Ansprüche, **dadurch gekennzeichnet, dass** anhand der mittels der Ausgabeeinheit (2) präsentierten Information eine interaktive Anleitung des Benutzers zur Beherrschung von Fahrzeugfunktionen und/oder Fahrsituationen durchführbar ist.

5. Vorrichtung nach einem der genannten Ansprüche, **dadurch gekennzeichnet, dass** die Arten der Informationsausgabe zumindest teilweise individuell konfigurierbar sind.

6. Vorrichtung nach einem der genannten Ansprüche, **dadurch gekennzeichnet, dass** die Arten der Informationsausgabe durch zusätzliche Präsentationsmittel ergänzbar und individualisierbar sind.

7. Vorrichtung nach einem der genannten Ansprüche, **dadurch gekennzeichnet, dass** die Vorrichtung eine Lernfunktion aufweist, bei der für einen Benutzer durch aktives Befolgen von mittels der Erklärungseinheit (11) bereitgestellten Anweisungen das Bedienen mindestens einer Fahrzeugfunktion erlernbar ist, wobei der Fahrer in Abhängigkeit der von ihm durchgeführten Handlungen von der Erklärungseinheit (11) mindestens eine positive oder negative Rückmeldung erhält.

8. Vorrichtung nach einem der genannten Ansprüche, **dadurch gekennzeichnet, dass** die Ausgabeeinheit (2) zumindest als Bestandteil einer Multifunktionsbedieneinheit und/oder eines Navigationssystems ausgebildet ist.

9. Vorrichtung nach einem der genannten Ansprüche, **dadurch gekennzeichnet, dass** durch den Benutzer bedarfsweise mittels einer Eingabevorrichtung mindestens ein Marker setzbar ist, wodurch die Ausgabe von mittels der Erklärungseinheit (11) zu einem aktuellen Zeitpunkt bereits ausgewählter und bereitsteltbarer Information auf einen späteren Zeitpunkt verschiebbar ist.

10. Vorrichtung nach einem der genannten Ansprüche, **dadurch gekennzeichnet, dass** die Eingabevorrichtung als Einrichtung zur Spracherkennung (24) ausgebildet ist.

11. Vorrichtung nach Anspruch 10, **dadurch gekennzeichnet, dass** mittels der Einrichtung zur Spracherkennung (24) mindestens eine Stimmkenngröße des Benutzers erfassbar ist.

12. Verfahren zur Informationsausgabe und/oder Hilfestellung für den Benutzer eines Kraftfahrzeugs, umfassend
• mindestens eine Ausgabeeinheit (2) zur Ausgabe von Information,
• mindestens eine Erfassungseinheit zum Erfassen von Statusdaten bezüglich von Fahrzeugkomponenten (5) und/oder Daten bezüglich einer Fahr- und/oder Fahrersituation (6, 7),
• mindestens eine Auswerteeinheit (10) zum Auswerten und Interpretieren der von der Erfassungseinheit erfassten Daten,
• mindestens eine Erklärungseinheit (11) zum Auswählen und Bereitstellen von Information und/oder Hilfestellung für den Benutzer in Abhängigkeit der von der Auswerteeinheit (10) ausgewerteten und interpretierten Daten,
wobei zur Präsentation der ausgegebenen Information mindestens eine aus einer Mehrzahl von verfügbaren Arten der Informationsausgabe in Abhängigkeit der Fahrsituation und/oder des Benutzerwunsches ausgewählt und eingesetzt wird und die Bereitstellung und Ausgabe der Information selbsttätig in Abhängigkeit einer Fahrsituation und/oder eines vom Benutzer und/oder von der Erklärungseinheit (11) festgelegten Zeitpunkts erfolgt,
**dadurch gekennzeichnet; dass**
das Verhalten des Benutzers mittels mindestens eines Kamerasystems (22) erfasst wird und die Bereitstellung der Information zusätzlich in Abhängigkeit des von dem Kamerasystem (22) erfassten Verhaltens des Benutzers erfolgt.

13. Verfahren nach Anspruch 12, **dadurch gekennzeichnet, dass** zur Informationsausgabe ein mittels der Ausgabeeinheit (2) erzeugter anthropomorpher virtueller Charakter verwendet wird.

14. Verfahren nach einem der Ansprüche 12 oder 13, **dadurch gekennzeichnet, dass** durch das Kamerasystem (22) die Blickrichtung des Benutzers erfasst wird und die Bereitstellung der Information in Abhängigkeit der Blickrichtung des Benutzers erfolgt.

15. Verfahren nach einem der Ansprüche 12 bis 14, **dadurch gekennzeichnet, dass** anhand der mittels der Ausgabeeinheit (2) präsentierten Information eine interaktive Anleitung des Benutzers zur Beherrschung von Fahrzeugfunktionen und/oder Fahrsituationen durchgeführt wird.

16. Verfahren nach einem der Ansprüche 12 bis 15, **dadurch gekennzeichnet, dass** die Arten der Informationsausgabe zumindest teilweise individuell konfiguriert werden.

17. Verfahren nach einem der Ansprüche 12 bis 16, **dadurch gekennzeichnet, dass** die Arten der Informationsausgabe durch zusätzliche Präsentationsmittel ergänzt und individualisiert werden.

18. Verfahren nach einem der Ansprüche 12 bis 17, **dadurch gekennzeichnet, dass** die Vorrichtung eine Lernfunktion aufweist, bei der für einen Benutzer durch aktives Befolgen von mittels der Enklärungseinheit (11) bereitgestellten Anweisungen das Bedienen mindestens einer Fahrzeugfunktion erlernt wird, wobei der Fahrer in Abhängigkeit der von ihm durchgeführten Handlungen von der Erklärungseinheit (11) mindestens eine positive oder negative Rückmeldung erhält.

19. Verfahren nach einem der Ansprüche 12 bis18, **dadurch gekennzeichnet, dass** die Ausgabeeinheit (2) zumindest als Bestandteil einer Multifunktionsbedieneinheit und/oder eines Navigationssystems ausgebildet ist.

20. Verfahren nach einem der Ansprüche 12 bis19, **dadurch gekennzeichnet, dass** durch den Benutzer bedarfsweise mittels einer Eingabevorrichtung mindestens ein Marker gesetzt wird, wodurch die Darstellung von mittels der Erklärungseinheit (11) zu einem aktuellen Zeitpunkt bereits ausgewählter und bereitstellbarer Information auf einen späteren Zeitpunkt verschoben wird.

21. Verfahren nach einem der Ansprüche 12 bis 20, **dadurch gekennzeichnet, dass** die Eingabevorrichtung als Einrichtung zur Spracherkennung ausgebildet ist.

22. Verfahren nach Anspruch 21, **dadurch gekennzeichnet, dass** mittels der Einrichtung zur Spracherkennung eine Stimmkenngröße des Benutzers erfasst wird.

## Claims

1. Device for outputting information and/or providing assistance to the user of a motor vehicle, comprising
• at least one output unit (2) for outputting information,
• at least one detection unit for detecting status data relating to vehicle components (5) and/or data relating to a driving and/or driver situation (6, 7),
• at least one evaluation unit (10) for evaluating and interpreting the data detected by the detection unit,
• at least one explanation unit (11) for selecting and making available information and/or providing assistance to the user as a function of the data which are evaluated and interpreted by the evaluation unit (10),
wherein, for the presentation of the information which is output, the explanation unit is designed to select and use at least one from a plurality of available forms of information output as a function of the driving situation and/or the user's request, and the information is made available automatically as a function of a driving situation and/or a time which is defined by the user and/or by the explanation unit (11), **characterized in that** the device comprises at least one camera system (22) for detecting the behaviour of the user, which camera system (22) is connected to the evaluation unit (10) or the explanation unit (11), and the information is additionally made available as a function of the user's behaviour which is detected by the camera system (22).

2. Device according to Claim 1, **characterized in that** an anthropomorphous virtual character which can be generated by means of the output unit (2) is used to output information.

3. Device according to Claim 1 or 2, **characterized in that** the viewing direction of the user can be detected by the camera system (22), and the information is made available as a function of the viewing direction of the user.

4. Device according to one of the specified claims, **characterized in that** the interactive instruction of the user in order to cope with vehicle functions and/or driving situations can be provided on the basis of the information presented by means of the output unit (2).

5. Device according to one of the specified claims, **characterized in that** the forms of information output can be configured on an at least partially individual basis.

6. Device according to one of the specified claims, **characterized in that** the forms of information output can be supplemented and individualized using additional presentation means.

7. Device according to one of the specified claims, **characterized in that** the device has a learning function in which the operation of at least one vehicle function can be learnt by a user by actively following instructions made available by the explanation unit (11), wherein the driver receives at least one item of positive or negative feedback from the explanation unit (11) as a function of the actions carried out by him.

8. Device according to one of the specified claims, **characterized in that** the output unit (2) is embodied at least as a component of a multifunction operator control unit and/or a navigation system.

9. Device according to one of the specified claims, **characterized in that** at least one marker can be set by the user, if necessary by means of an input device, as a result of which the outputting of information which has already been selected and can be made available at a current time by means of the explanation unit (11) is postponed to a later time.

10. Device according to one of the specified claims, **characterized in that** the input device is embodied as a speech recognition apparatus (24).

11. Device according to Claim 10, **characterized in that** at least one voice characteristic variable of the user can be detected by means of the voice recognition apparatus (24).

12. Method for outputting information and/or providing assistance to the user of a motor vehicle, comprising
• at least one output unit (2) for outputting information,
• at least one detection unit for detecting status data relating to vehicle components (5) and/or data relating to a driving and/or driver situation (6, 7),
• at least one evaluation unit (10) for evaluating and interpreting the data detected by the detection unit,
• at least one explanation unit (11) for selecting and making available information and/or providing assistance to the user as a function of the data which are evaluated and interpreted by the evaluation unit (10),
wherein, for the presentation of the information which is output, at least one from a plurality of available forms of information output is selected and used as a function of the driving situation and/or the user's request, and the information is made available and output automatically as a function of a driving situation and/or a time which is defined by the user and/or by the explanation unit (11), **characterized in that** the behaviour of the user is detected by means of at least one camera system (22), and the information is additionally made available as a function of the user's behaviour which is detected by the camera system (22).

13. Method according to Claim 12, **characterized in that** an anthropomorphous virtual character which can be generated by means of the output unit (2) is used to output information.

14. Method according to one of Claims 12 or 13, **characterized in that** the viewing direction of the user is detected by the camera system (22), and the information is made available as a function of the viewing direction of the user.

15. Method according to one of Claims 12 to 14, **characterized in that** the interactive instruction of the user in order to cope with vehicle functions and/or driving situations is provided on the basis of the information presented by means of the output unit (2).

16. Method according to one of Claims 12 to 15, **characterized in that** the forms of information output can be configured on an at least partially individual basis.

17. Method according to one of Claims 12 to 16, **characterized in that** the forms of information output are supplemented and individualized using additional presentation means.

18. Method according to one of Claims 12 to 17, **characterized in that** the device has a learning function in which the operation of at least one vehicle function can be learnt by a user by actively following instructions made available by the explanation unit (11), wherein the driver receives at least one item of positive or negative feedback from the explanation unit (11) as a function of the actions carried out by him.

19. Method according to one of Claims 12 to 18, **characterized in that** the output unit (2) is embodied at least as a component of a multifunction operator control unit and/or a navigation system.

20. Method according to one of Claims 12 to 19, **characterized in that** at least one marker is set by the user, if necessary by means of an input device, as a result of which the displaying of information which has already been selected and can be made available at a current time by means of the explanation unit (11) is postponed to a later time.

21. Method according to one of Claims 12 to 20, **characterized in that** the input device is embodied as a voice recognition apparatus.

22. Method according to Claim 21, **characterized in that** a voice characteristic variable of the user is detected by means of the voice recognition apparatus.

## Revendications

1. Dispositif pour l'émission d'informations et/ou l'assistance à l'utilisateur d'un véhicule automobile, comprenant :
- au moins une unité d'émission (2) pour délivrer des informations,
- au moins une unité de détection pour détecter des données d'état concernant des composants du véhicule (5) et/ou des données concernant une situation de conduite et/ou de conducteur (6, 7),
- au moins une unité d'analyse (10) pour analyser et interpréter les données détectées par l'unité de détection,
- au moins une unité de déclaration (11) pour sélectionner et fournir des informations et/ou une assistance à l'utilisateur en fonction des données analysées et interprétées par l'unité d'analyse (10),
l'unité de déclaration étant réalisée,
en vue de présenter les informations émises, de manière à sélectionner et utiliser au moins un parmi une pluralité de types disponibles de l'émission d'informations en fonction de la situation de conduite et/ou du souhait de l'utilisateur, et la fourniture des informations s'effectuant automatiquement en fonction d'une situation de conduite et/ou d'un instant fixé par l'utilisateur et/ou par l'unité de déclaration (11),
**caractérisé en ce que** le dispositif comprend au moins un système de caméra (22) pour détecter le comportement de l'utilisateur, qui est associé à l'unité d'analyse (10) ou à l'unité de déclaration (11), et la fourniture des informations s'effectue en outre en fonction du comportement de l'utilisateur détecté par le système de caméra (22).

2. Dispositif selon la revendication 1, **caractérisé en ce que** pour l'émission des informations, on utilise un personnage virtuel anthropomorphe pouvant être produit au moyen de l'unité d'émission (2).

3. Dispositif selon la revendication 1 ou 2, **caractérisé en ce que** grâce au système de caméra (22), on peut détecter la direction du regard de l'utilisateur et les informations sont fournies en fonction de la direction du regard de l'utilisateur.

4. Dispositif selon l'une quelconque des revendications précédentes, **caractérisé en ce que** l'on peut effectuer à l'aide des informations présentées au moyen de l'unité d'émission (2) une invitation interactive de l'utilisateur à commander des fonctions du véhicule et/ou des situations de conduite.

5. Dispositif selon l'une quelconque des revendications précédentes, **caractérisé en ce que** les types d'émission d'informations peuvent être configurés au moins en partie de manière individuelle.

6. Dispositif selon l'une quelconque des revendications précédentes, **caractérisé en ce que** les types d'émission d'informations peuvent être complétés et individualisés par des moyens de présentation supplémentaires.

7. Dispositif selon l'une quelconque des revendications précédentes, **caractérisé en ce que** le dispositif présente une fonction d'apprentissage, avec laquelle la commande d'au moins une fonction du véhicule peut être apprise par un utilisateur en suivant activement des indications fournies au moyen de l'unité de déclaration (11), le conducteur recevant de l'unité de déclaration (11), en fonction des manipulations qu'il effectue, au moins une réponse positive ou négative.

8. Dispositif selon l'une quelconque des revendications précédentes, **caractérisé en ce que** l'unité d'émission (2) est réalisée au moins sous forme de constituant d'une unité de commande multifonctionnelle et/ou d'un système de navigation.

9. Dispositif selon l'une quelconque des revendications précédentes, **caractérisé en ce que** l'utilisateur peut poser un marqueur au besoin au moyen d'un dispositif de saisie, de sorte que l'émission d'informations déjà sélectionnées et pouvant être fournies au moyen de l'unité de déclaration (11) à un instant actuel puisse être déplacée à un instant ultérieur.

10. Dispositif selon l'une quelconque des revendications précédentes, **caractérisé en ce que** le dispositif de saisie est réalisé sous forme de dispositif de reconnaissance de la parole (24).

11. Dispositif selon la revendication 10, **caractérisé en ce qu'**au moins une caractéristique de la voix de l'utilisateur peut être détectée au moyen du dispositif de reconnaissance de la parole (24).

12. Procédé pour l'émission d'informations et/ou l'assistance à l'utilisateur d'un véhicule automobile, comprenant :
- au moins une unité d'émission (2) pour délivrer des informations,
- au moins une unité de détection pour détecter des données d'état concernant des composants du véhicule (5) et/ou des données concernant une situation de conduite et/ou de conducteur (6, 7),
- au moins une unité d'analyse (10) pour analyser et interpréter les données détectées par l'unité de détection,
- au moins une unité de déclaration (11) pour sélectionner et fournir des informations et/ou une assistance à l'utilisateur en fonction des données analysées et interprétées par l'unité d'analyse (10),
dans lequel, pour la présentation des informations émises, au moins un parmi une pluralité de types disponibles de l'émission d'informations peut être sélectionné et utilisé en fonction de la situation de conduite et/ou du souhait de l'utilisateur, et la fourniture et l'émission des informations s'effectuent automatiquement en fonction d'une situation de conduite et/ou d'un instant fixé par l'utilisateur et/ou par l'unité de déclaration (11),
**caractérisé en ce que**
le comportement de l'utilisateur est détecté au moyen d'au moins un système de caméra (22) et la fourniture des informations s'effectue en outre en fonction du comportement de l'utilisateur détecté par le système de caméra (22).

13. Procédé selon la revendication 12, **caractérisé en ce que** pour l'émission d'informations, on utilise un personnage virtuel anthropomorphe produit au moyen de l'unité d'émission (2).

14. Procédé selon l'une quelconque des revendications 12 ou 13, **caractérisé en ce qu'**à l'aide du système de caméra (22), on détecte la direction du regard de l'utilisateur et les informations sont fournies en fonction de la direction du regard de l'utilisateur.

15. Procédé selon l'une quelconque des revendications 12 à 14, **caractérisé en ce que** qu'à l'aide des informations présentées au moyen de l'unité d'émission (2), on effectue une invitation interactive de l'utilisateur à commander des fonctions du véhicule et/ou des situations de conduite.

16. Procédé selon l'une quelconque des revendications 12 à 15, **caractérisé en ce que** les types de l'émission d'informations sont configurés en moins en partie individuellement.

17. Procédé selon l'une quelconque des revendications 12 à 16, **caractérisé en ce que** les types de l'émission d'informations sont complétés et individualisés par des moyens de présentation supplémentaires.

18. Procédé selon l'une quelconque des revendications 12 à 17, **caractérisé en ce que** le dispositif présente une fonction d'apprentissage, avec laquelle la commande d'au moins une fonction du véhicule peut être apprise par un utilisateur en suivant activement des indications fournies au moyen de l'unité de déclaration (11), le conducteur recevant de l'unité de déclaration (11), en fonction des manipulations qu'il effectue, au moins une réponse positive ou négative.

19. Procédé selon l'une quelconque des revendications 12 à 18, **caractérisé en ce que** l'unité d'émission (2) est réalisée au moins sous forme de constituant d'une unité de commande multifonctionnelle et/ou d'un système de navigation.

20. Procédé selon l'une quelconque des revendications 12 à 19, **caractérisé en ce que** l'utilisateur peut poser un marqueur au besoin au moyen d'un dispositif de saisie, de sorte que la représentation d'informations déjà sélectionnées et pouvant être fournies au moyen de l'unité de déclaration (11) à un instant actuel puisse être déplacée à un instant ultérieur.

21. Procédé selon l'une quelconque des revendications 12 à 20, **caractérisé en ce que** le dispositif de saisie est réalisé sous forme de dispositif de reconnaissance de la parole.

22. Procédé selon la revendication 21, **caractérisé en ce qu'**une caractéristique de la voix de l'utilisateur est détectée au moyen du dispositif de reconnaissance de la parole.
